# EUROPÄISCHE PATENTSCHRIFT

(11) **EP 1 044 750 B1**
(45) Veröffentlichungstag und Bekanntmachung des Hinweises auf die Patenterteilung: **28.09.2005**
(21) Anmeldenummer: 00103927.0
(22) Anmeldetag: 25.02.2000
(51) Int. Cl.: B23H 9/00, B23H 9/16

(54) **Verfahren zur elektrochemischen Bearbeitung von Strömungskanälen mettalischer Werkstücke**
Method for electrochemical machining of flow channels in metallic workpieces
Méthode d'usinage électrochimique des canaux d'écoulement dans des pièces métalliques

(30) Priorität: 15.04.1999 DE 19917043
(43) Veröffentlichungstag der Anmeldung: 18.10.2000
(73) Patentinhaber: Frembgen, Fritz-Herbert, D-87700 Memmingen (DE)
(72) Erfinder: Frembgen, Fritz-Herbert, D-87700 Memmingen (DE)
(74) Vertreter: Kloiber, Thomas

(56) Entgegenhaltungen:
- EP-A- 0 802 009
- US-A- 5 865 977

## Beschreibung

Die Erfindung betrifft ein Verfahren zum elektrochemischen Bearbeiten von Werkstücken, die von einem Elektrolyten durchflossen werden, dessen Durchflußmenge pro Zeiteinheit nach einer Arbeitsperiode bei abgeschaltetem Arbeitsstrom in einem Kalibriervorgang bei einem konstanten hohen Druck gemessen wird, und bei dem die Bearbeitung beendet wird, wenn die Durchflußmenge pro Zeiteinheit gleich einem bei demselben hohen Druck gemessenen Durchsatz des Elektrolyten oder einer gleichwertigen Testflüssigkeit eines Musterwerkstückes ist, wobei der hohe Druck des Elektrolyten durch ein Fremdfluid aufrecht erhalten wird, das sich zusammen mit einer mindestens für den Kalibriervorgang ausreichenden Elektrolytmenge in einem gemeinsamen Druckspeicher befindet.

Ein derartiges Verfahren zeigt die EP-B 0802 009 die den nächstliegenden Stand der Technick darstellt. Ziel des bekannten Verfahrens ist es, während des Kalibrierens der Strömungskanäle im Werkstück einen möglichst pulsationsfreien Elektrolytstrom zu erzeugen, der unter einem Druck in der Größenordnung von 100 bar steht und dessen Durchsatz gemessen und mit einem Sollwert verglichen wird, den man aus einem Musterwerkstück gewonnen hat.

Ein wichtiges Einsatzgebiet ist z.B. das Kalibrieren von Einspritzdüsen, die in Kraftfahrzeugmotoren verwendet werden. Von diesen Düsen wird erwartet, daß sie bei sehr hohen Betriebsdrücken des Dieselöls einen sehr eng tolerierten Durchsatz haben. In dem bekannten Verfahren wird davon ausgegangen, daß Düsen, die denselben Elektrolytdurchsatz während der Kalibriervorgänge haben, im späteren Einsatz auch hinsichtlich des Dieselöldurchsatzes übereinstimmen, wobei dieser Ansatz jedenfalls dann zu guten Ergebnissen führt, wenn der durchströmende Elektrolyt während der Kalibrierung etwa unter demselben Druck steht, wie das Dieselöl im späteren Kraftfahrzeugbetrieb.

In der WO 90/05039 wird noch davon ausgegangen, daß die Druckdifferenz in den sehr engen Düsenkanälen, also die in diesen herrschende Strömungsgeschwindigkeit nur eine untergeordnete Rolle spielt und beispielsweise der Viskositätsunterschied zwischen dem Elektrolyten und der den Düsenkörper später durchströmenden Betriebsflüssigkeit, z.B. Dieselöl für wichtiger gehalten wird.

Moderne Dieselmotoren, die das sogenannte Common-Rail-Prinzip verwenden, arbeiten mit Betriebsdrücken von über 1000 bar und die Genauigkeitsanforderungen an die Einspritzdüsen wachsen natürlich mit dem Anstieg der Betriebsdrücke. Das eingangs genannte Verfahren stößt bei diesen hohen Betriebsdrücken an Grenzen, weil es technisch schwierig, wenn nicht gar unmöglich ist, Gas-Regelventile ausreichender Genauigkeit für Druckbereiche in der Größenordnung von 1000 bar zu erhalten. Auch das Komprimieren des gasförmigen Fremdfluids auf diese hohen Druckwerte erfordert einen hohen technischen Aufwand. Weiterhin schlagen die Kosten für die großvolumigen Druckspeicher negativ zu Buche.

Aufgabe der Erfindung ist es, das bekannte Verfahren dahingehend auszubilden, daß das Kalibrieren von Tochterwerkstücken bei deren elektrochemischer Bearbeitung unter einem Elektrolytdruck von weit über 100 bar vorgenommen werden kann und zwar mit einer Anlage, die mit vertretbarem technischen Aufwand den Elektrolytdruck reproduzierbar konstant hält.

Diese Aufgabe wird durch die Merkmale und Maßnahmen des Patentanspruches 1 gelöst.

Im Gegensatz zum eingangs genannten Stand der Technnik wird die für das Kalibrieren benötigte Elektrolytmenge praktisch drucklos in das Elektrolytabteil des Druckspeichers gefördert, während eine gleich große Flüssigkeitsmenge aus dem Flüssigkeitsabteil des Druckspeichers in ein druckloses Reservoir verdrängt wird. Nachdem das Flüssigkeitsabteil und das Elektrolytabteil des Druckspeichers gegenüber dem Reservoir und dem Elektrolyttank abgesperrt sind, was elektrolytseitig z.B. mittels eines Rückschlagventils bewirkt werden kann, besorgt eine Hochdruckpumpe den Druckaufbau im Flüssigkeitsabteil des Druckspeichers. Die Druckkonstanz im Flüssigkeitsabteil läßt sich mit einem Flüssigkeitshochdruckregler sehr genau einhalten, was bei einem Gasdruckregler - abgesehen von den unvergleichlich höheren Kosten - auf Schwierigkeiten stößt, wenn man die hohen Drücke in der Größenordnung von 1000 bar im Auge behält. Die während des Kalibrierens aus dem Elektrolytabteil austretende Elektrolytmenge muß durch eine gleich große, von der Flüssigkeitshochdruckpumpe geförderte Flüssigkeitsmenge ständig ersetzt werden, was bei geeigneter Auslegung der Pumpe keine Probleme aufwirft. Der denkbare Nachteil beim erfindungsgemäßen Verfahren, daß von der Hochdruckpumpe Pulsationen im Flüssigkeitsabteil erzeugt und auf den Elektrolyten übertragen werden, die den Kalibriervorgang störend beeinflussen könnten, macht sich überraschenderweise in der Praxis nicht bemerkbar, insbesondere wenn dem Flüssigkeitsabteil des Druckspeichers ein vergleichsweise großvolumiger Dämpfungspuffer vorgeschaltet wird. Wesentlich ist, daß der Druck im Flüssigkeitsabteil nach Beendigung des Kalibriervorganges abgebaut wird, indem die Auslaßleitung zum Reservoir geöffnet wird, sodaß die neue Elektrolytmenge drucklos oder allenfalls über einen niedrigen Gegendruck in das Elektrolytabteil des Druckspeichers gefördert werden kann. Der Dämpfungspuffer bleibt jedoch - mit Ausnahme der Druckaufbauphase in dem Flüssigkeitsabteil - ständig unter dem hohen Betriebsdruck und ist auch ständig an die Hochdruckpumpe angeschlossen, was ein Absperren der Hochdruckpumpen-Förderleitung nebst Dämpfungspuffer vom Flüssigkeitsabteil des Druckspeichers erfordert, wenn das Flüssigkeitsabteil mit dem Reservoir verbunden wird. Dies ist mittels eines einfachen Umschaltventils möglich.

Als Hochdruckpumpe wird vorzugsweise eine Zahnradpumpe oder eine aus mehreren hintereinandergeschalteten Zahnradpumpen bestehende Pumpenanordnung verwendet. Alternativ liegt es im Rahmen der Erfindung, eine Axialkolbenpumpe als Hochdruckpumpe einzusetzen. Für die erfindungsgemäße Anwendung ist es wichtig, daß im Flüssigkeitsabteil des Druckspeichers eine möglichst geringe Welligkeit im Druckverlauf über der Zeit erreicht wird.

Als Druckspeicher hat sich ein geschlossener zylindrischer Behälter bewährt, etwa nach der Art einer Kohlensäureflasche, bei der eine Membrane eingebaut ist, die das Flüssigkeitsabteil vom Elektrolytabteil trennt. Alternativ kann als Druckspeicher aber auch ein Zylinder eingesetzt werden, in dem ein Kolben frei verschiebbar gelagert ist.

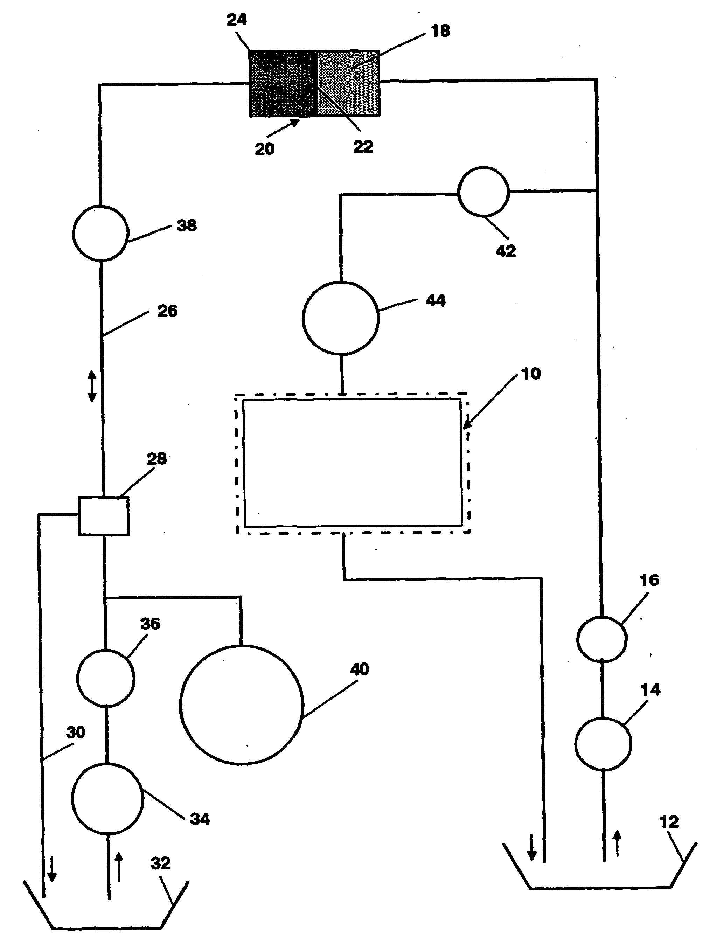

Anhand der Zeichnung wird die Erfindung beispielsweise näher beschrieben.

Die einzige Figur zeigt ein Schaltbild der zur Bereitstellung einer Elektrolytmenge unter hohem Druck für das Kalibrieren von Werkstücken erforderlichen Komponenten.

Mit 10 ist der sogenannte ecm-Bereich bezeichnet, in dem die elektrochemische Bearbeitung metallischer Werkstücke stattfindet. Die Komponenten dieser ecm-Anlage sind bekannt und werden hier nicht weiter beschrieben. In einer zu kalibrierenden Düse wird zwischen Anode und Kathode ein Arbeitsspalt gebildet, der von einem Elektrolyten durchflossen wird. Wenn während einer Arbeitsperiode im Arbeitsspalt Strom fließt, wird am Werkstück - z.B. am Düseneingang - Material abgebaut, um eine Einlaufrundung zu erzeugen. Durch diese Bearbeitung ändert sich der Durchflußwiderstand der Düse, die anschließend zu kalibrieren ist. Dazu vergleicht man die Durchflußmenge pro Zeiteinheit des Elektrolyten im gerade bearbeiteten Werkstück mit derjenigen Menge desselben Elektrolyten eines Musterwerkstückes. Die Meßwerte des Musterwerkstückes werden als Sollwerte gespeichert, die bei einem hohen Druck beispielsweise 1000 bar gewonnen worden sind. Ensprechend wird beim Kalibrieren des neuen Werkstückes derselbe hohe Druck im Elektrolyten verwendet. Stimmt der gemessene Ist-Wert des das Werkstück durchströmenden Elektrolytvolumens pro Zeiteinheit mit dem Sollwert überein, ist die Kalibrierung abgeschlossen und die Erfahrung zeigt, daß die Durchflußwerte der Musterdüse und der Tochterdüse beim späteren Betriebseinsatz, z.B. als Einspritzdüse eines Dieselmotors sich innerhalb eines sehr engen Toleranzbereiches nicht voneinander unterscheiden, obwohl das Betriebsmedium Dieselöl eine andere Viskosität als der verwendetete Elektrolyt hat. Viel wichtiger als die Viskosität als Vergleichsparameter ist die Übereinstimmung der Druckwerte beim Kalibrieren und im späteren Betriebseinsatz.

Die Kalibriervorbereitung läuft folgendermaßen ab. Aus einem Tank 12 wird Elektrolytflüssigkeit mittels einer Niederdruckpumpe 14 über ein Rückschlagventil 16 in ein Elektrolytabteil 18 eines Druckspeichers 20 gefördert. Dabei verschiebt sich eine Membran 22 im Druckspeicher 20, die das Elektrolytabteil 18 von einem Flüssigkeitsabteil 24 trennt. Die im Flüssigkeitsabteil 24 befindliche Flüssigkeit z.B. ein Öl, wird durch eine Flüssigkeitsleitung 26, ein Umschaltventil 28 und eine Entleerungsleitung 30 in ein Reservoir 32 verdrängt Sobald im Elektrolytabteil 18 eine für das Kalibrieren des Werkstückes ausreichende Elektrolytmenge eingefüllt ist, schaltet das Umschaltventil 28 um und verbindet das Flüssigkeitsabteil 24 mit einer Hochdruckpumpe 34, die Flüssigkeit aus dem Reservoir 32 über ein Rückschlagventil 36 in das Flüssigkeitsabteil 24 pumpt und dabei einen Hochdruck in der Größenordnung von 1000 bar aufbaut. Der Sollhochdruck wird mittels eines hochgenauen Regelventils 38 in einem Toleranzbereich von +/- 0,1 bar konstant gehalten. In Strömungsrichtung stromauf des Umschaltventils 28 zweigt von der Flüssigkeitsförderleitung eine Leitung ab, die zu einem großvolumigen Dämpfungspuffer 40 führt, in dem schon ein Druck oberhalb des Solldruckes der Flüssigkeit herrscht, da der Dämpfungspuffer vor dem Umschalten des Umschaltventils 28 von der Hochdruckpumpe 34 aufgeladen worden ist. Beim Umschalten des Umschaltventils 28 von Entleerung des Flüssigkeitsabteils 24 auf Füllung bewirkt der Dämpfungspuffer sofort eine erheblich Drucksteigerung im Flüssigkeitsabteil 24, sodaß die Hochdruckpumpe 34 nur kurzzeitig laufen muß, um den Solldruck im Flüssigkeitsabteil 24 zu erreichen.

Der Kalibriervorgang kann nun beginnen. Dazu wird das Ventil 42 geöffnet, sodaß der unter Hochdruck stehende Elektrolyt aus dem Elektrolytabteil 18 über ein Durchflußmesser 44 zur ecm-Anlage 10 fließen kann, wo er die zu bearbeitende Düse des Werkstückes durchströmt und anschließend in den Tank 12 zurückfließt. Die Durchflußmenge pro Zeiteinheit wird im Mengenzähler 44 bestimmt und vom Sollwert abgezogen. Ist die Differenz größer als Null findet der nächste Bearbeitungsvorgang statt. Nachdem der Durchflußwert im Mengenzähler 44 gemessen worden ist, wird das Ventil 42 geschlossen und das Arbeitsspiel zur Füllung des Druckspeichers 20 mit der Elektrolytmenge für den nächsten Kalibriervorgang beginnt erneut.

## Patentansprüche

1. Verfahren zum elektrochemischen Bearbeiten von Werkstücken, die von einem Elektrolyten durchflossen werden, dessen Durchflußmenge pro Zeiteinheit nach einer Arbeitsperiode bei abgeschaltetem Arbeitsstrom in einem Kalibriervorgang bei einem konstanten hohen Druck gemessen wird, und bei dem die Bearbeitung beendet wird, wenn die gemessene Durchflußmenge pro Zeiteinheit gleich einem bei demselben hohen Druck gemessenen Durchsatz des Elektrolyten oder einer gleichwertigen Testflüssigkeit eines Musterwerkstückes ist, wobei der hohe Druck des Elektrolyten durch ein Fremdfluid aufrecht erhalten wird, das sich zusammen mit einer mindestens für den Kalibriervorgang ausreichenden Elektrolytmenge in einem gemeinsamen Druckspeicher befindet, **dadurch gekennzeichnet, daß** im Druckspeicher (20) ein Elektrolytabteil (18) und ein davon durch ein bewegliches Trennorgan (22) abgeteiltes Flüssigkeitsabteil (24) gebildet sind, daß die Elektrolytmenge aus einem Tank (12) mit Niederdruck in das Elektrolytabteil (18) gefördert wird, während gleichzeitig eine entsprechende Flüssigkeitsmenge aus dem Flüssigkeitsabteil (24) in ein Reservoir (32) verdrängt wird, daß nach Absperren des Druckspeichers (20) gegenüber dem Tank (12) und dem Reservoir (32) im Flüssigkeitsabteil (24) mittels einer Hochdruckpumpe (34) über ein hochgenaues Regelventil (38) der hohe Flüssigkeitsdruck aufgebaut wird, nach dessen Erreichen der Kalibriervorgang beginnt, und daß die Hochdruckpumpe (34) den während des Kalibriervorganges aus dem Elektrolytabteil (18) abfließenden Elektrolytstrom durch einen gleichgroßen Flüssigkeitsstrom im Flüssigkeitsabteil (24) ergänzt und in diesem den konstanten Hochdruck aufrecht erhält.

2. Verfahren nach Anspruch 1, **dadurch gekennzeichnet, daß** dem Flüssigkeitsabteil (24) des Druckspeichers (20) ein Druckvorspeicher als Pulsationsdämpfer vorgeschaltet ist.

3. Verfahren nach Anspruch 1 oder 2, **dadurch gekennzeichnet, daß** als Hochdruckpumpe (34) eine Zahnradpumpe oder eine Mehrzylinder-Axialkolbenpumpe verwendet wird.

4. Verfahren nach einem der Ansprüche 1 bis 3, **dadurch gekennzeichnet, daß** die vom Elektrolytabteil (18) zum Werkstück führende Elektrolytleitung während des Füllens des Elektrolytabteils (18) und während des Hochdruckaufbaus im Flüssigkeitsabteil (24) abgesperrt wird.

5. Verfahren nach einem der Ansprüche 1 bis 4, **dadurch gekennzeichnet, daß** das Trennorgan (22) des Druckspeichers (20) durch einen Membrane gebildet wird .

6. Verfahren nach einem der Ansprüche 1 bis 4, **dadurch gekennzeichnet, daß** das Trennorgan des Druckspeichers (20) durch einen in einem Zylinder frei verschiebbaren Kolben gebildet wird.

## Claims

1. A method for electrochemical processing of workpieces around which electrolyte flows, whose flow rate per unit time after a working period with the working current switched off is measured in a calibration process at a constant high pressure and wherein the processing is ended when the measured flow rate per unit time is the same as a throughput of the electrolyte or an equivalent test liquid of a sample workpiece measured at the same high pressure, wherein the high pressure of the electrolyte is maintained by an external fluid which is located together with at least a quantity of electrolyte sufficient for the calibration process in a common pressure storage device, **characterised in that** a electrolyte section (18) and a liquid section (24) separated therefrom by a movable separating member (22) is formed in the pressure storage device (20), that the quantity of electrolyte is conveyed from a tank (12) at low pressure into the electrolyte section (18) whereas at the same time a corresponding quantity of liquid is displaced from the liquid section (24) into a reservoir (32), that after shutting off the pressure storage device (20) with respect to the tank (12) and the reservoir (32) the high liquid pressure is built up in the liquid section (24) by means of a highpressure pump (34) via a high-precision regulating valve (38), and after said pressure has been reached, the calibration process begins and that the highpressure pump (34) supplements the electrolyte flow flowing from the electrolyte section (18) during the calibration process by an equivalent liquid flow in the liquid section (24) and maintains the constant high pressure therein.

2. The method according to claim 1, **characterised in that** a pressure preliminary storage device is inserted before the liquid section (24) of the pressure storage device (20) as a pulsation damper.

3. The method according to claim 1 or claim 2, **characterised in that** a geared pump or a multicylinder axial piston pump is used as the highpressure pump (34).

4. The method according to any one of claims 1 to 3, **characterised in that** the electrolyte line leading from the electrolyte section (18) to the workpiece is shut off during the filling of the electrolyte section (18) and during the build-up of high pressure in the liquid section (24).

5. The method according to any one of claims 1 to 4, **characterised in that** the separating member (22) of the pressure storage device (20) is formed by a membrane.

6. The method according to any one of claims 1 to 4, **characterised in that** the separating member of the pressure storage device (20) is formed by a piston which is freely displaceable in a cylinder.

## Revendications

1. Procédé en vue du traitement électrochimique de pièces à usiner qui sont parcourues par un électrolyte dont le débit par unité de temps est mesuré après une période de travail avec le courant de travail déconnecté dans un processus d'étalonnage à une pression élevée constante et dans lequel le traitement est terminé lorsque le débit mesuré par unité de temps est égal au débit mesuré à la même pression élevée de l'électrolyte ou d'un liquide de test de même valeur d'une pièce à usiner modèle, la pression élevée de l'électrolyte étant maintenue par un fluide étranger, qui se trouve conjointement avec une quantité d'électrolyte suffisante au moins pour le processus d'étalonnage dans un accumulateur hydraulique commun, **caractérisé en ce qu'**un compartiment à électrolyte (18) et un compartiment à liquide (24) divisé de celui-ci par un élément de séparation mobile (22) sont formés dans l'accumulateur hydraulique (20), **en ce que** la quantité d'électrolyte provenant d'une cuve (12) est transportée à basse pression dans le compartiment à électrolyte (18) tandis qu'une quantité de liquide correspondante provenant du compartiment à liquide (24) est comprimée simultanément dans un réservoir (32), **en ce que** la pression de liquide élevée, après l'atteinte de laquelle le processus d'étalonnage commence, est générée après le blocage de l'accumulateur hydraulique (20) par rapport à la cuve (12) et au réservoir (32) dans le compartiment à liquide (24) au moyen d'une pompe à haute pression (34) par l'intermédiaire d'une soupape régulatrice hautement précise (38) et **en ce que** la pompe à haute pression (34) complète le courant d'électrolyte s'écoulant pendant le processus d'étalonnage du compartiment à électrolyte (18) par un courant de liquide de même taille dans le compartiment à liquide (24) et maintient la pression élevée constante dans celui-ci.

2. Procédé selon la revendication 1, **caractérisé en ce qu'**un accumulateur hydraulique préalable est monté en amont du compartiment à liquide (24) de l'accumulateur hydraulique (20) en tant qu'amortisseur d'impulsions.

3. Procédé selon la revendication 1 ou 2, **caractérisé en ce qu'**une pompe à engrenages ou une pompe à plusieurs cylindres-pistons axiaux est utilisée comme pompe à haute pression (34).

4. Procédé selon l'une quelconque des revendications 1 à 3, **caractérisé en ce que** la conduite d'électrolyte conduisant du compartiment à électrolyte à la pièce à usiner est bloquée pendant le remplissage du compartiment à électrolyte (18) et pendant la génération de pression élevée dans le compartiment à liquide (24).

5. Procédé selon l'une quelconque des revendications 1 à 4, **caractérisé en ce que** l'élément de séparation (22) de l'accumulateur hydraulique (20) est formé par une membrane.

6. Procédé selon l'une quelconque des revendications 1 à 4, **caractérisé en ce que** l'élément de séparation de l'accumulateur hydraulique (20) est formé par un piston pouvant être déplacé librement dans un cylindre.
